# EUROPEAN PATENT APPLICATION

(11) **EP 4 487 982 A1**
(43) Date of publication of application: **08.01.2025**
(21) Application number: 24176868.8
(22) Date of filing: 20.05.2024
(51) Int. Cl.: B22F 10/28, B22F 12/30, B29C 64/245, B33Y 10/00, B33Y 30/00, B33Y 40/00, B29C 64/153

(54) **MODULAR BUILD PLATE AND METHOD FOR ADDITIVE MANUFACTURING**

(30) Priority: 31.05.2023 US 202318326710
(71) Applicant: Spirit AeroSystems, Inc., Wichita, KS 67210-0008 (US)
(72) Inventor: PAYNE, Travis, Wichita, 67210 (US); MISAK, Heath, Wichita, 67210 (US)
(74) Representative: HGF

(57) **Abstract**

An additive build assembly broadly includes a modular build plate and a plurality of build parts. The build parts are formed via an additive build process. The modular build plate includes a substrate and a plurality of build plate sections supported by the substrate to cooperatively define an additive build surface to receive the build parts. At least one of the build plate sections is removably attached relative to the substrate to permit selective detachment of the at least one build plate section from the remainder of the build plate sections.

## Description

### BACKGROUND

Additive manufacturing, also known as 3D printing, is well known for producing complex three-dimensional objects with exceptional design flexibility. One prominent method of additive manufacturing is laser powder bed fusion (LPBF), which utilizes a laser to selectively melt and fuse successive layers of metallic powder material to form the desired object. After each layer is fused to the previous layer, a new layer of powder is spread across the surface by a roller and the process is repeated until the part is complete.

Conventional powder bed fusion machines and techniques are problematic for various reasons. Prior art metallic LPBF manufacturing methods involve significant post-processing work and expense. For example, removal and clean-up of unused metallic powder from the fusion machine and printed parts is notoriously expensive and time consuming. Because powder removal is conventionally done inside the fusion machine, the time-extensive removal process reduces the overall production time of the fusion machine.

Conventional metallic LPBF methods also result in contamination of unused powder material and may require premature disposal of unused powder material. When unused powder material is recycled for use in a subsequent build process, contaminants in the unused powder may impact the quality of build parts.

Thus there is a need for improved methods and apparatuses for LPBF manufacturing that does not suffer from these and other disadvantages.

### SUMMARY

In one or more embodiments of the invention, a modular build plate is operable to receive and support a plurality of build parts formed via an additive build process. The modular build plate broadly includes a substrate and a plurality of build plate sections. The build plate sections are supported by the substrate and cooperatively define an additive build surface to receive the build parts. At least one of the build plate sections is removably attached relative to the substrate to permit selective detachment of the at least one build plate section from a remainder of said build plate sections.

In another embodiment, an additive build assembly broadly includes a modular build plate and a plurality of build parts. The build parts are formed via an additive build process. The modular build plate includes a substrate and a plurality of build plate sections supported by the substrate to cooperatively define an additive build surface to receive the build parts. At least one of the build plate sections is removably attached relative to the substrate to permit selective detachment of the at least one build plate section from the remainder of the build plate sections.

In yet another embodiment, a method of producing multiple build parts formed via an additive build process broadly includes the steps of removably attaching a plurality of build plate sections relative to one another to cooperatively form at least part of a modular build plate; forming a plurality of build parts on respective ones of the build plate sections of the modular build plate; and detaching the build plate sections from each other to permit separation of the build parts.

The invention may also be understood with reference to the embodiments set out in following numbered clauses:
Clause 1: A modular build plate operable to receive and support a plurality of build parts formed via an additive build process, said modular build plate comprising:
   a substrate; and
   a plurality of build plate sections supported by the substrate and cooperatively defining an additive build surface to receive the build parts,
   at least one of said build plate sections being removably attached relative to the substrate to permit selective detachment of said at least one build plate section from a remainder of said build plate sections.
Clause 2: The modular build plate of clause 1, wherein the substrate comprises a base plate, with the build plate sections each being removably attached to the substrate by respective fasteners.
Clause 3: The modular build plate of clause 2, wherein an outermost ring is formed by one or more of the build plate sections and extends continuously to define an outer margin of the modular build plate, with the outermost ring being operable to receive and support a canister formed via the additive build process.
Clause 4: The modular build plate of clause 3, wherein the outermost ring defines an opening, with one or more of said build plate sections being nested within the opening.
Clause 5: The modular build plate of any of clauses 1 to 4, wherein the substrate and at least one of the build plate sections is integrally formed with one another.
Clause 6: The modular build plate of clause 5, wherein an outermost ring is formed by one or more of the build plate sections and extends continuously to define an outer margin of the modular build plate, with the outermost ring being operable to receive and support a canister formed via the additive build process.
Clause 7: The modular build plate of any of clauses 1 to 6, wherein an annular outermost ring is formed by one or more of the build plate sections and extends continuously to define an outer margin of the modular build plate.
Clause 8 The modular build plate of clause 7, wherein the outermost ring defines an opening; and an annular inner ring formed by one or more of the build plate sections and nested within the opening.
Clause 9: The modular build plate of clause 8, wherein the inner ring is formed by a series of circumferentially spaced arcuate build plate sections.
Clause 10: The modular build plate of clause 9, wherein a circular innermost section is formed by one of the build plate sections and is nested within the inner ring.
Clause 11: An additive build assembly comprising:
   a modular build plate and a plurality of build parts, with the build parts being formed via an additive build process,
   said modular build plate including a substrate and a plurality of build plate sections supported by the substrate to cooperatively define an additive build surface to receive the build parts,
   at least one of said build plate sections being removably attached relative to the substrate to permit selective detachment of the at least one build plate section from the remainder of said build plate sections.
Clause 12: The additive build assembly of clause 11, wherein the substrate comprises a base plate, with the build plate sections each being removably attached to the substrate by respective fasteners.
Clause 13: The additive build assembly of clause 12, wherein an outermost ring is formed by one or more of the build plate sections and extends continuously to define an outer margin of the modular build plate, one of the build parts comprising a canister containing the remaining build parts, with the outermost ring being operable to receive and support the canister.
Clause 14: The additive build assembly of clause 13, wherein the outermost ring defines an opening, with one or more of said build plate sections being nested within the opening.
Clause 15: The additive build assembly of clause 13 or 14, wherein the additive build process comprises a powder bed fusion process, with the canister containing the remaining build parts and unused powder.
Clause 16: The additive build assembly of any one of clauses 11 to 15, wherein each of the build plate sections receives a respective one of the build parts.
Clause 17: The additive build assembly of any one of any one of clauses 11 to 16, wherein the substrate and at least one of the build plate sections is integrally formed with one another.
Clause 18: The additive build assembly of clause 17, wherein an outermost ring is formed by one or more of the build plate sections and extends continuously to define an outer margin of the modular build plate, one of the build parts comprises a canister containing the remaining build parts, with the outermost ring being operable to receive and support a canister formed via the additive build process.
Clause 19: The additive build assembly of any one of any one of clauses 11 to 18, wherein an annular outermost ring is formed by one or more of the build plate sections and extends continuously to define an outer margin of the modular build plate.
Clause 20: The additive build assembly of clause 19, wherein the outermost ring defines an opening; and an annular inner ring formed by one or more of the build plate sections and nested within the opening.
Clause 21: The additive build assembly of clause 20, wherein the inner ring is formed by a series of circumferentially spaced arcuate build plate sections.
Clause 22: The additive build assembly of clause 21, wherein a circular innermost section is formed by one of the build plate sections and is nested within the inner ring.
Clause 23: The additive build assembly of any one of clauses 19 to 22, wherein one of the build parts comprises a canister containing the remaining build parts, with the annular outermost ring being operable to receive and support the canister.
Clause 24: A method of producing multiple build parts formed via an additive build process, the method comprising:
   (a) removably attaching a plurality of build plate sections relative to one another to cooperatively form at least part of a modular build plate;
   (b) forming a plurality of build parts on respective ones of the build plate sections of the modular build plate; and
   (c) detaching the build plate sections from each other to permit separation of the build parts.
Clause 25: The method of clause 24, wherein step (a) includes the step of removably fastening at least one of the build plate sections to a substrate.
Clause 26: The method of clause 24 or 25, wherein step (a) includes the step of removably fastening all of the build plate sections to a substrate.
Clause 27: The method of any one of clauses 24 to 26, wherein one or more build plate sections form an annular outermost ring that extends endlessly to define an outer margin of the modular build plate, with one of the build parts comprising a canister.
Clause 28: The method of clause 27, wherein step (b) includes the step of forming the canister to contain the remaining build parts, with the outermost ring being operable to receive and support the canister.
Clause 29: The method of any one of clauses 24 to 28, wherein step (c) includes the step of removing fasteners from the build plate sections to detach the build plate sections from each other.

This summary is intended to introduce a selection of concepts in a simplified form that are further described in the detailed description below. This summary is not intended to identify key features or essential features of the claimed subject matter, nor is it intended to be used to limit the scope of the claimed subject matter. Other aspects and advantages of the present invention will be apparent from the following detailed description of the embodiments and the accompanying drawing figures.

### BRIEF DESCRIPTION OF THE DRAWING FIGURES

Embodiments of the present invention are described in more detail below with reference to the attached drawing figures, wherein:
FIG. 1 is an upper perspective view of an additive build assembly constructed in accordance with a first embodiment of the present invention, showing a modular build plate and a canister of the additive build assembly;
FIG. 2 is a fragmentary upper perspective view of the additive build assembly shown in FIG. 1, depicting formed build parts supported on the modular build plate;
FIG. 3 is an upper perspective view of the modular build plate shown in FIGS. 1 and 2, depicting a base plate and build plate sections removably attached to the base plate;
FIG. 4 is a lower perspective view of the modular build plate similar to FIG. 3, but taken from the opposite side;
FIG. 5 is a fragmentary cross-sectional view of the modular build plate taken along line 5-5 in FIG. 4;
FIG. 6 is an upper perspective view of the modular build plate similar to FIG. 3, but depicting an outermost ring sectioned and other build plate sections detached from the base plate;
FIG. 7 is a lower perspective view of the modular build plate similar to FIG. 6, but taken from the opposite side;
FIG. 8 is an upper perspective view of an additive build assembly constructed in accordance with a second embodiment of the present invention, showing a modular build plate and build parts of the additive build assembly, with the build parts being nested relative to one another;
FIG. 9 is a fragmentary upper perspective view of the additive build assembly shown in FIG. 8, with the additive build assembly being cross sectioned to depict the base plate and build plate sections of the modular build plate, and further depicting build parts supported on respective build plate sections and being nested relative to one another;
FIG. 10 is a fragmentary upper perspective view of the additive build assembly similar to FIG. 9, but showing an inner ring and innermost build plate section detached from the base plate to facilitate separation of the build parts;
FIG. 11 is an upper perspective view of an additive build assembly constructed in accordance with a third embodiment of the present invention, showing a modular build plate and build parts of the additive build assembly, with one of the build parts comprising a canister, and with the canister being sectioned to depict the other build part;
FIG. 12 is an exploded perspective view of the additive build assembly shown in FIG. 11;
FIG. 13 is a lower perspective view of the modular build plate shown in FIGS. 11 and 12; and
FIG. 14 is a fragmentary cross-sectional view of the modular build plate taken along line 14-14 in FIG. 13.

The drawing figures do not limit the present invention to the specific embodiments disclosed and described herein. The drawings are not necessarily to scale, emphasis instead being placed upon clearly illustrating the principles of the invention.

### DETAILED DESCRIPTION

The following detailed description of embodiments of the invention references the accompanying drawings. The embodiments are intended to describe aspects of the invention in sufficient detail to enable those skilled in the art to practice the invention. Other embodiments can be utilized, and changes can be made, without departing from the scope of the claims. The following detailed description is, therefore, not to be taken in a limiting sense. The scope of the present invention is defined only by the appended claims, along with the full scope of equivalents to which such claims are entitled.

In this description, references to "one embodiment", "an embodiment", or "embodiments" mean that the feature or features being referred to are included in at least one embodiment of the technology. Separate references to "one embodiment", "an embodiment", or "embodiments" in this description do not necessarily refer to the same embodiment and are also not mutually exclusive unless so stated and/or except as will be readily apparent to those skilled in the art from the description. For example, a feature, structure, act, etc. described in one embodiment may also be included in other embodiments but is not necessarily included. Thus, the present technology can include a variety of combinations and/or integrations of the embodiments described herein.

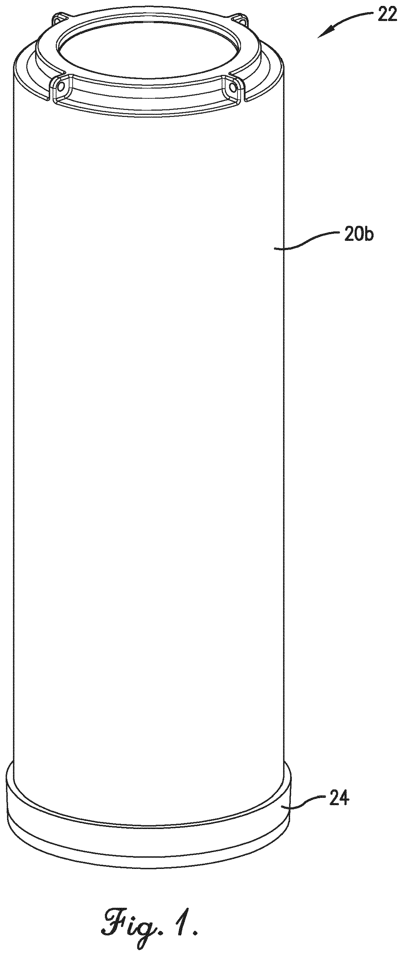

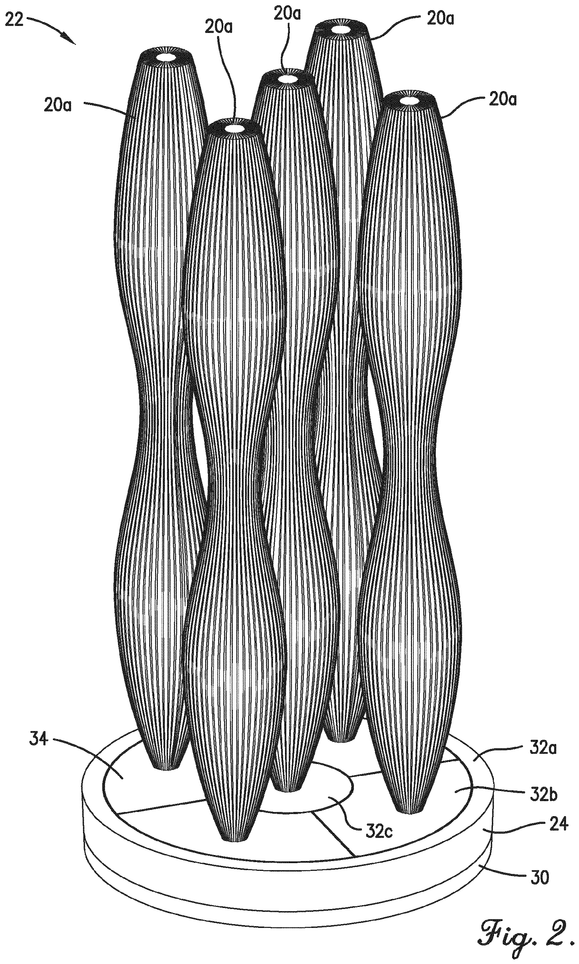

Turning initially to FIGS. 1 and 2, various types of build parts (such as build parts 20a,b) may be formed as part of an additive build assembly 22 using an additive build process. The present invention facilitates a certified powder removal process aimed toward consolidating the post-processing of production parts that are 3D printed by a Laser Powder Bed Fusion (LPFB) process. Aspects of the inventive apparatus and process have been found to increase machine run time. Furthermore, aspects of the present invention enable the convenient separation of additively manufactured parts during post processing.

At the same time, certain aspects of the present invention minimize operator exposure to metallic powder while containing unused powder. As will be described in more detail, the use of a canister method permits most of the post-processing work to be done in a designated area for powder clean up and for removal of printed parts from the build plate. In this manner, aspects of the present invention advantageously facilitate efficient and contained removal of unused powder.

In the illustrated embodiment, the additive build assembly 22 broadly includes a modular build plate 24 and the build parts 20a,b.

Build parts 20a,b are preferably formed using additive manufacturing. The additive build machine (not shown) associated with at least some aspects of the present invention preferably comprises a laser powder bed fusion (LPBF) machine. More preferably, a metallic LPBF machine is used to form the parts, such as parts 20a,b.

It is also within the ambit of certain aspects of the present invention for one or more parts to be formed by an alternative additive process or using a combination of powder bed fusion process and another additive process. Suitable alternative processes may include, among other things, electron beam fusion, electrochemical deposition, binder jetting, kinetic fusion, material extrusion (such as with friction stirring or Joule heating), liquid metal jetting, solid state sheet lamination, and direct energy deposition (DED) processes.

While aspects of the present invention are preferably directed to metal additive manufacturing, it is also within the scope of certain aspects of the present invention for additive build parts to include synthetic resin materials. For example, it will be appreciated that one or more parts may be formed via an additive build process (such as a powder bed fusion process) using one or more layers of a polymer material.

In the usual manner, the LPBF machine preferably includes, among other things, a housing, a laser, a table that receives a layer of powder (not shown), a vertically shiftable build platform, and a sleeve extending below the table. The housing and sleeve cooperatively form a build chamber that receives the build parts. The build platform, modular build plate 24, and build parts 20a,b are operable be advanced downwardly into the sleeve as layers of build parts 20a,b are formed in series on the modular build plate 24.

In the depicted embodiment, build parts 20a,b associated with the additive build assembly 22 may include one or more formed parts 20a and a canister 20b formed by the additive build process. Canister 20b preferably comprises a unitary construction and is formed to surround and contain the parts 20a and unused powder (not shown).

It is within the scope of at least certain aspects of the present invention for the additive build assembly to have an alternative canister configuration. For example, alternative canisters may be alternatively sized and/or configured. Alternative embodiments of the additive build assembly may include multiple discrete canisters.

The use of canister 20b has been found to provide several advantages. For example, canister 20b advantageously permits the powder removal process to be conducted at a post-processing facility, which may or not be associated with the LPFB machine. Disassociating powder removal from the LPFB machine also increases machine run time. Yet further, canister 20b serves to minimize operator exposure to metallic powder while containing the unused powder.

However, it is also within the scope of certain aspects of the present invention for an alternative build assembly to be devoid of a canister that surrounds and contains formed parts and unused powder. For instance, it will be appreciated by those of skill in the art that embodiments of an additive build assembly may form one or more parts on a modular build plate without also forming a canister (as will be shown in a subsequent embodiment).

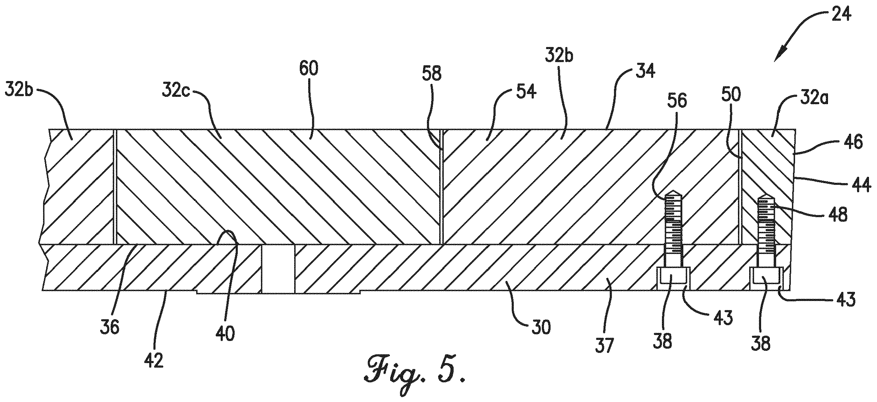

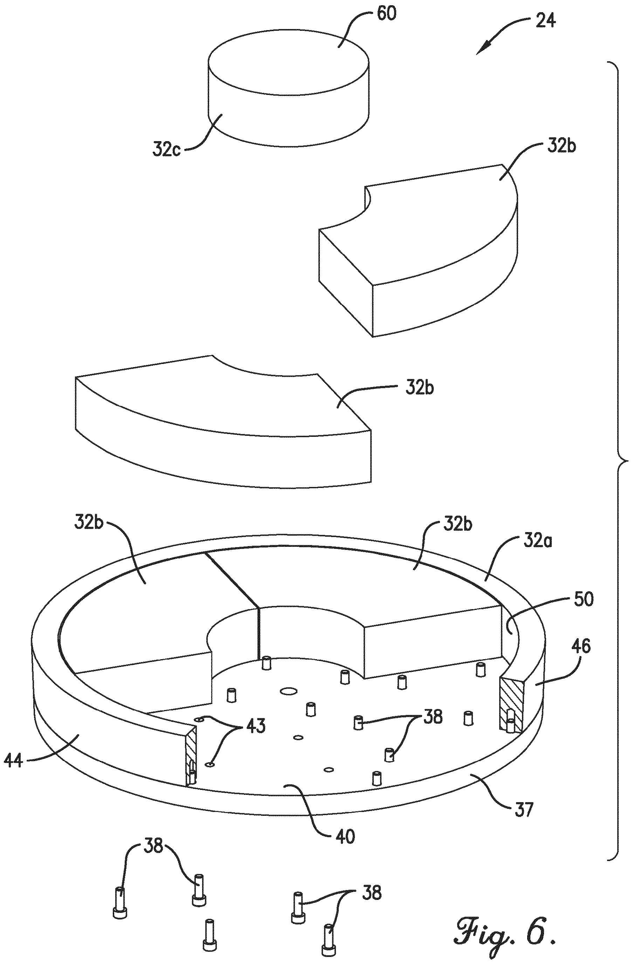

Turning to FIGS. 2-7, modular build plate 24 preferably includes a substrate 30 and a plurality of build plate sections 32a,b,c supported by the substrate 30 to cooperatively define an additive build surface 34 (see FIGS. 2, 3, and 5) to receive the build parts 20a,b. In the usual manner, build parts 20a,b are welded onto the additive build plate surface 34 during the build process. Build plate sections 32 also cooperatively define a build plate mounting surface 36 that engages the substrate 30 (see FIG. 5). As will be described, at least one of the build plate sections 32 is removably attached relative to the substrate 30 to permit selective detachment of the at least one build plate section 32 from the remainder of the build plate sections 32.

The illustrated substrate 30 preferably comprises a base plate 37 having a unitary construction and removably attached to the build plate sections 32 by threaded fasteners 38 (see FIGS. 5-7). That is, the depicted build plate sections 32 are removably attached to the base plate 37 with respective fasteners 38. Base plate 37 presents a build plate support surface 40 and an opposite base plate mounting surface 42, with fastener openings 43 extending between the surfaces 40,42 (see FIGS. 5-7).

The principles of at least certain aspects of the present invention are also applicable for a base plate that is alternatively removably attached relative to one or more build plate sections. In such embodiments, alternative fasteners may be used to removably secure one or more build plate sections to the base plate, to one or more other build plate sections, and/or to one or more other structures. Such alternative fasteners may include alternative threaded fasteners, other types of mechanical fastening elements (such as pins, detents, straps, dogs, clamps, etc.), and/or other types of releasable attachment elements (such as magnets).

In use, base plate 37 and corresponding build plate sections 32 are preferably removably attached to one another to cooperatively form the modular build plate 24. The base plate mounting surface 42 may then be removably engaged with the shiftable build platform so that the modular build plate 24 may be supported on the shiftable build platform and removably attached thereto with one or more fasteners (not shown) or other releasable attachment elements.

An outermost ring 44 of the modular build plate 24 is preferably defined by the build plate section 32a and extends endlessly to define an outer margin 46 of the modular build plate 24. Outermost ring 44 has a unitary construction and presents corresponding parts of the additive build plate surface 34 and build plate mounting surface 36. However, it is also within the scope of certain aspects of the present invention for the outermost ring to be formed by multiple build plate sections that extend continuously to define the outer margin.

Outermost ring 44 further presents threaded fastener openings 48 and a central ring opening 50 (see FIGS. 5-7). The central ring opening 50 extends from the additive build plate surface 34 to the build plate mounting surface 36 and removably receives other build plate sections 32.

The outermost ring 44 preferably receives and supports the canister 20b. In particular, the canister 20b is formed on the outermost ring 44 during the build process and is supported on the outermost ring 44. With the canister 20b fully formed, the canister 20b cooperates with the modular build plate 24 to enclose and contain the formed parts 100a and unused powder. In alternative embodiments, the canister may be supported on one or more alternative build plate sections. For example, a canister may be supported on a build plate section that is spaced within the outermost margin of the modular build plate. Again, it is also within the ambit of at least certain aspects of the present invention for the additive build assembly to have an alternative canister construction (e.g., for containing formed parts and unused powder).

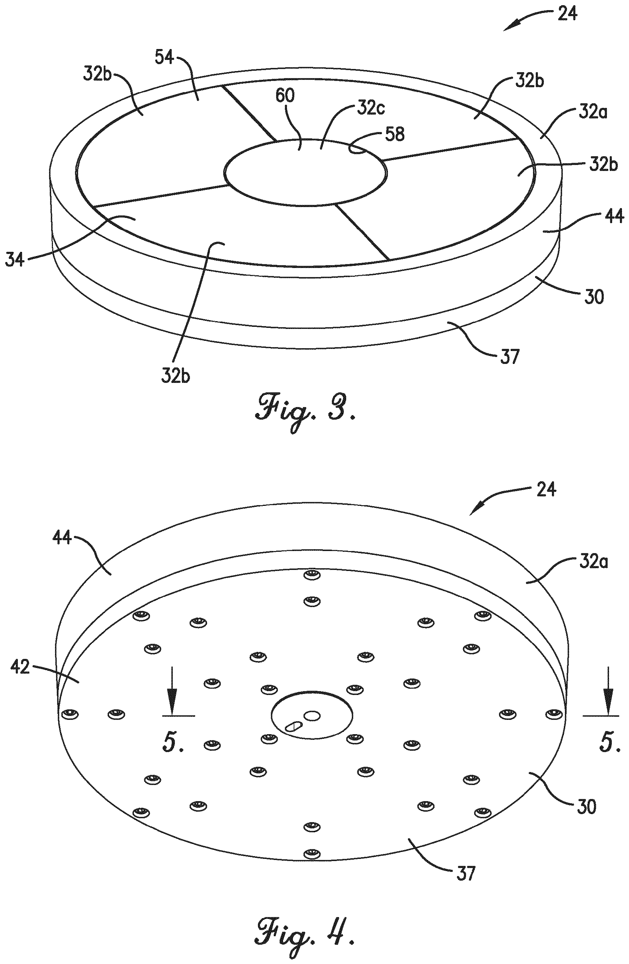

An annular inner ring 54 of the modular build plate 24 is preferably formed by a series of circumferentially spaced, arcuate, build plate sections 32b that extend along the outermost ring 44 (see FIG. 3). Inner ring 54 preferably extends continuously along the outermost ring 44 and presents corresponding parts of the additive build plate surface 34 and build plate mounting surface 36.

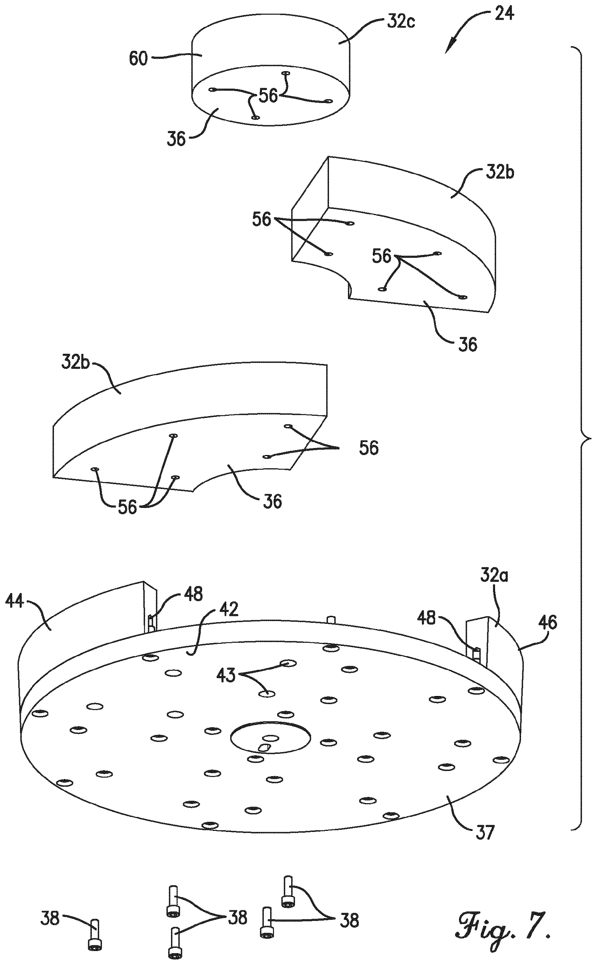

Inner ring 54 further presents threaded fastener openings 56 (see FIGS. 5 and 7) and a central ring opening 58 (see FIGS. 3 and 5). The central ring opening 58 extends from the additive build plate surface 34 to the build plate mounting surface 36 and removably receives a circular innermost plate 60 defined by the build plate section 32. Innermost plate 60 also presents threaded fastener openings 56.

To facilitate convenient and expedient separation of parts, innermost plate 60 is preferably removably nested within the central ring opening 58 of the inner ring 54. Furthermore, inner ring 54 and innermost plate 60 are preferably removably nested within the central ring opening 50 of the outermost ring 44.

Again, base plate 37 and corresponding build plate sections 32 may be removably attached to one another to cooperatively form the modular build plate 24. In particular, the build plate mounting surface 36 may be removably engaged with the build plate support surface 40 so that the build plate sections 32 may be supported on the base plate 37 and removably attached thereto with fasteners 38.

Although the depicted arrangement of outermost ring 44, inner ring 54, and innermost plate 60 is preferred, it will be appreciated that one or more build parts may be alternatively shaped (and/or otherwise alternatively configured) to provide an alternative array (such as a nested array) of build plate sections. Certain alternative configurations will be described in subsequent embodiments.

In use, build plate sections 32 may be removably attached to the base plate 37 to form the modular build plate 24. Modular build plate 24 may be removably attached to the shiftable build platform with one or more fasteners (not shown). With the modular build plate 24 secured in the machine, build parts (such as the canister 20b and formed parts 20a) may be formed on respective build plate sections 32 of the modular build plate 24.

Again, for at least certain aspects of the present invention, the modular build plate 24 may be used to construct various build parts. For instance, the build parts may not include the depicted canister without departing from the scope of certain aspects of the present invention.

The canister 20b and build parts 20a are formed completely to cooperatively define the additive build assembly 22, which may be selectively removed from the machine as a self-contained unit. Subsequent to removal from the machine, additive build assembly 22 may then be selectively moved to a post-processing center (not shown).

At the post-processing center, additive build assembly 22 may be loaded into a de-powdering machine (not shown) to facilitate removal of unused powder from within the canister 20b. The additive build assembly 22 may then be selectively disassembled by detaching one or more build plate sections 32 from each other to permit separation of the build parts 20a,b. Preferably, disassembly is initiated by detaching and separating the outermost ring 44 and canister 20b from the base plate 37, which is preferably accomplished by removing the corresponding fasteners 38 from the base plate 37 and outermost ring 44. However, disassembly may instead be initiated by cutting (or otherwise separating) one or more build parts from the respective build plate sections. Exemplary tools for cutting build parts from build plate sections may include a wire EDM machine or other devices for cutting or removing metal.

With the canister 20b and outermost ring 44 separated, unused powder may be removed (e.g., by shifting/vibrating the work piece, removing by hand, vacuuming, and/or other removal processed) from the additive build assembly 22.

In the depicted embodiment, the inner ring 54 and innermost plate 60 may also be detached from the base plate 37 by removing the corresponding fasteners 38 from the base plate 37, inner ring 54, and innermost plate 60.

For build parts that remain attached to respective build plate sections following separation of the build parts, the build parts may then be cut or otherwise separated from the respective build plate sections. Again, preferred tools for cutting build parts from build plate sections may include a wire EDM machine or other devices for cutting or removing metal.

### Alternative Embodiments

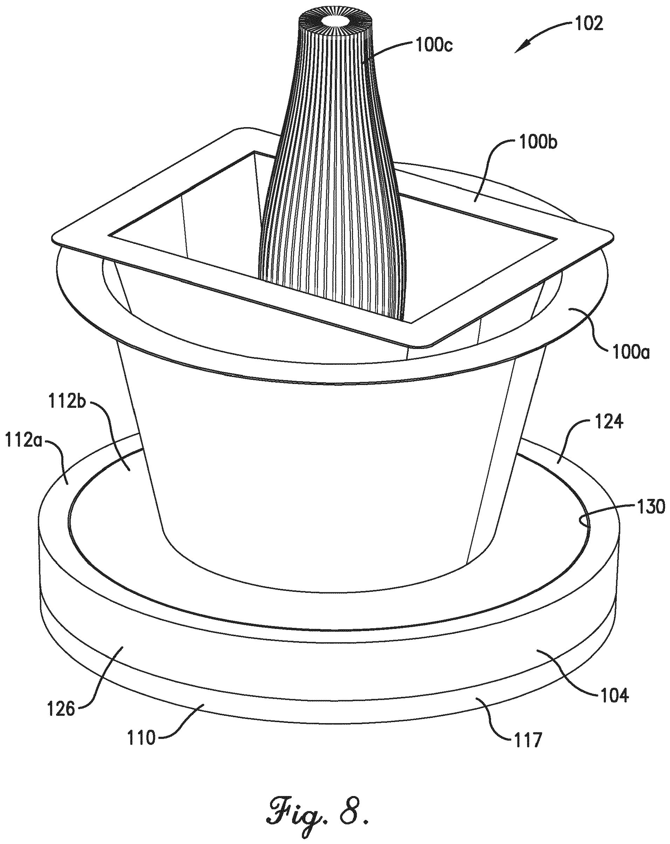

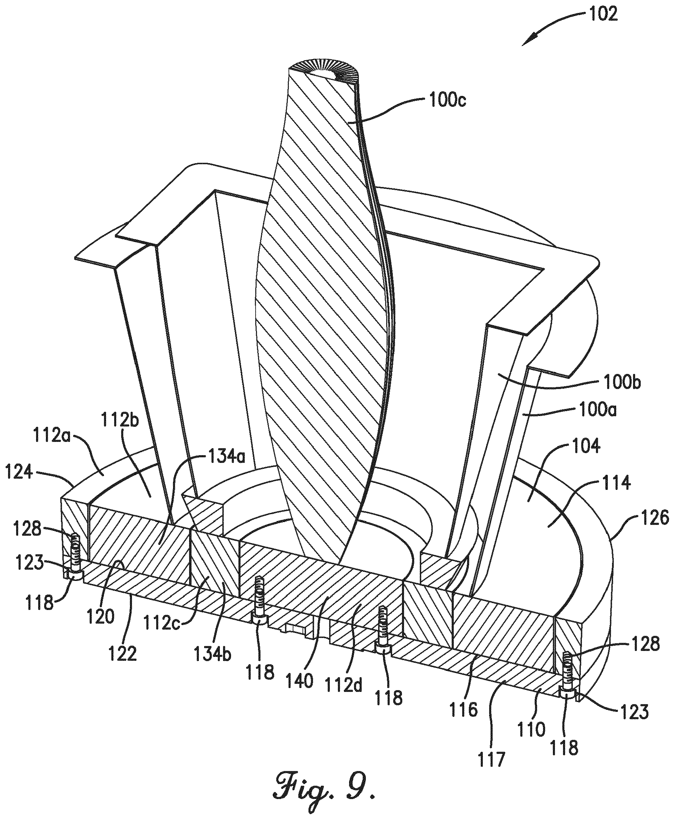

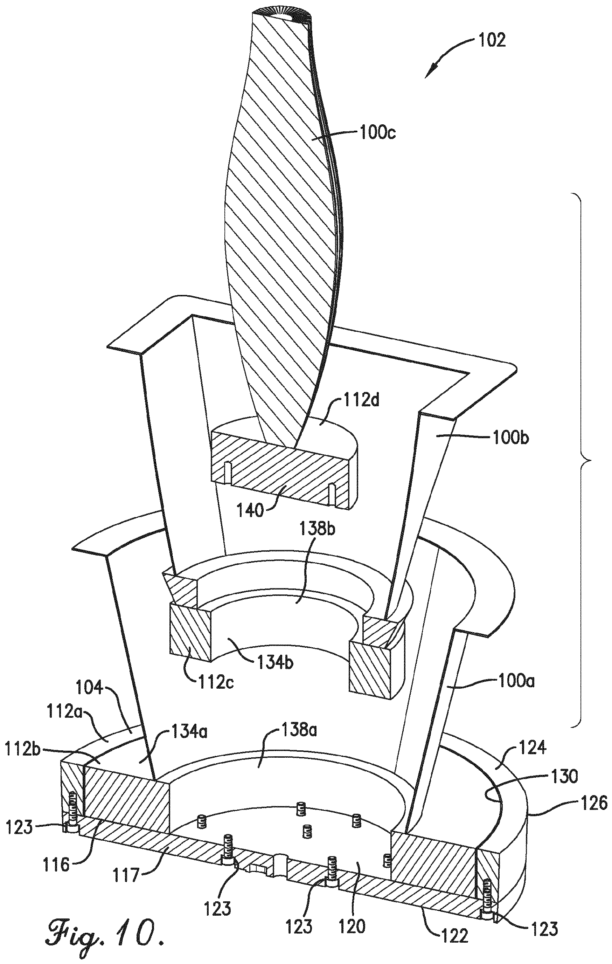

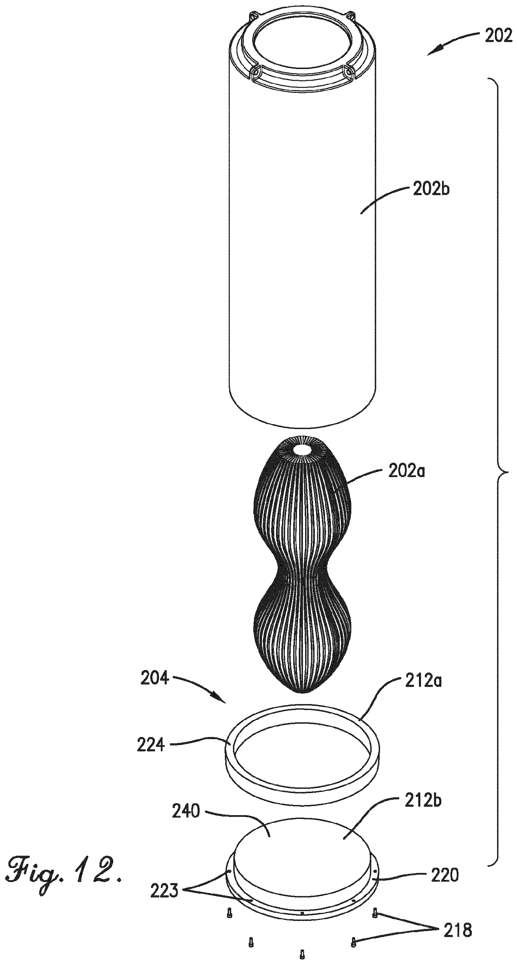

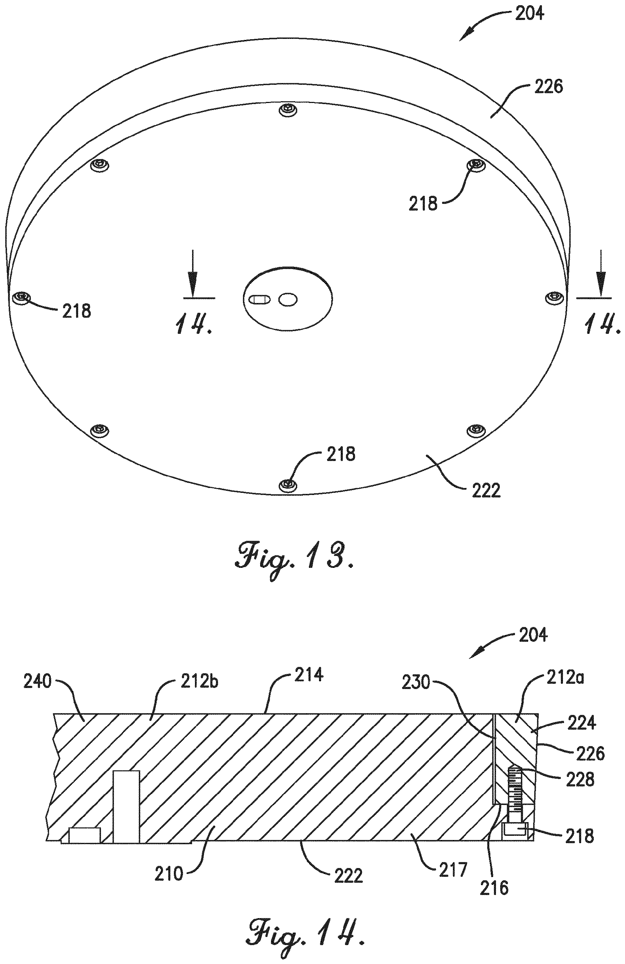

Turning to FIGS. 8-14, alternative preferred embodiments of the present invention are depicted. For the sake of brevity, the remaining description will focus primarily on the differences of these alternative embodiments from the preferred embodiment described above.

Initially turning to FIGS. 8-10, an alternative additive build assembly 102 is constructed in accordance with a second embodiment of the present invention and broadly includes a modular build plate 104 and the build parts 100a,b,c.

The depicted build parts 100a,b,c preferably comprise formed parts that are constructed by an additive build process. More preferably, build parts 100a,b,c are formed by an LPBF process and are nested relative to one another. The nested arrangement of build parts 100a,b,c enables the build process to produce large numbers of parts efficiently and quickly, while minimizing the amount of unused powder to be collected during post-process operations. It will also be appreciated that various parts and/or elements of parts may be nested and/or intertwined with one another to achieve suitable production efficiency, speed, and/or cost.

Modular build plate 104 preferably includes a substrate 110 and a plurality of build plate sections 112a,b,c,d supported by the substrate 110 to cooperatively define an additive build surface 114 to receive the build parts 100a,b,c. Build plate sections 112a,b,c,d also cooperatively define a build plate mounting surface 116 that engages the substrate 110.

The illustrated substrate 110 preferably comprises a base plate 117 having a unitary construction and removably attached to the build plate sections 112 by threaded fasteners 118. Base plate 117 presents a build plate support surface 120 and an opposite base plate mounting surface 122, with fastener openings 123 extending between the surfaces 120,122.

Base plate 117 and corresponding build plate sections 112 may be removably attached to one another to cooperatively form the modular build plate 104. The base plate mounting surface 122 may then be removably engaged with the shiftable build platform so that the modular build plate 104 may be supported on the shiftable build platform and removably attached thereto with one or more fasteners (not shown).

An outermost ring 124 of the modular build plate 104 is preferably formed by the build plate section 112a and extends endlessly to define an outer margin 126 of the modular build plate 104.

Outermost ring 124 presents threaded fastener openings 128 and a central ring opening 130. Although outermost ring 124 is secured to the base plate 117 with fasteners 118, it is within the scope of certain aspects of the present invention for an outermost ring to be alternatively removably attached relative to a substrate. For at least certain aspects of the present invention, an outermost ring may be fixed relative to the substrate (e.g., where the outermost ring and substrate are integrally formed).

In the depicted embodiment, outermost ring 124 does not receive or support any build parts of the additive build assembly 102 and does not support a canister. It is also within the ambit of certain aspects of the present invention for an outermost ring to support a canister and/or other build parts.

Annular inner rings 134a,b of the modular build plate 104 are preferably defined by respective unitary build plate sections 112b,c, which extend along the outermost ring 124. Inner rings 134a,b preferably present corresponding parts of the additive build plate surface 114 and build plate mounting surface 116.

The depicted inner rings 134a,b further present threaded fastener openings (not shown) and corresponding central ring openings 138a,b. Inner ring 134b is preferably nested within the central ring opening 138a of inner ring 134a.

An innermost plate 140 is preferably removably nested within the central ring opening 138b of the inner ring 134b. Furthermore, inner rings 134a,b and innermost plate 140 are preferably removably nested within the central ring opening 130 of the outermost ring 124.

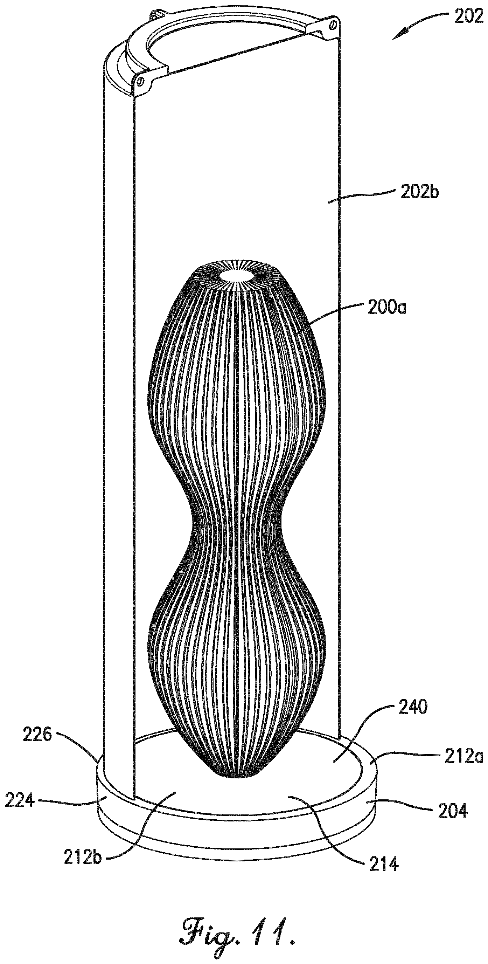

Turning to FIGS. 11-14, an alternative additive build assembly 202 is constructed in accordance with a third embodiment of the present invention and broadly includes a modular build plate 204 and build parts 200.

In the depicted embodiment, build parts 200a,b associated with the additive build assembly 202 may include a formed part 200a and a canister 200b formed by the additive build process. Canister 200b is preferably formed to surround and contain the part 200a and unused powder (not shown).

Modular build plate 204 preferably includes a substrate 210 and build plate sections 212a,b supported by the substrate 210 to cooperatively define an additive build surface 214 to receive the build parts 200a,b. Build plate section 212b also define a build plate mounting surface 216 that engages the substrate 210.

The illustrated substrate 210 preferably comprises a base plate 217 having a unitary construction. The substrate 210 is integrally formed with build plate section 212b and is removably attached to the build plate section 212a by threaded fasteners 218. Base plate 217 presents a build plate support surface 220 and an opposite base plate mounting surface 222, with fastener openings 223 extending between the surfaces 220,222.

Base plate 217 and build plate section 212a may be removably attached to one another to cooperatively form the modular build plate 204. The base plate mounting surface 222 may then be removably engaged with the shiftable build platform so that the modular build plate 204 may be supported on the shiftable build platform and removably attached thereto with one or more fasteners (not shown).

An outermost ring 224 of the modular build plate 204 is preferably formed by the build plate section 212 and extends endlessly to define an outer margin 226 of the modular build plate 204.

Outermost ring 224 presents threaded fastener openings 228 and a central ring opening 230. The outermost ring 224 preferably receives and supports the canister 200b. In particular, the canister 200b is formed on the outermost ring 224 during the build process and is supported on the outermost ring 224. With the canister 200b fully formed, the canister 200b cooperates with the modular build plate 204 to enclose and contain the formed part 200a and unused powder.

The build plate section 212b preferably comprises an innermost plate 240, which is integrally formed with the substrate 210. Innermost plate 240 is also removably nested within the central ring opening 230 of the outermost ring 224.

Although the invention has been described with reference to example embodiments illustrated in the attached drawing figures, it is noted that equivalents may be employed, and substitutions made herein, without departing from the scope of the invention as described and claimed herein.

Having thus described one or more embodiments of the invention, what is claimed as new and desired to be protected by Letters Patent includes the following:

## Claims

1. A modular build plate operable to receive and support a plurality of build parts formed via an additive build process, said modular build plate comprising:
a substrate; and
a plurality of build plate sections supported by the substrate and cooperatively defining an additive build surface to receive the build parts,
at least one of said build plate sections being removably attached relative to the substrate to permit selective detachment of said at least one build plate section from a remainder of said build plate sections.

2. The modular build plate of claim 1, wherein the substrate and at least one of the build plate sections is integrally formed with one another; and optionally
wherein an outermost ring is formed by one or more of the build plate sections and extends continuously to define an outer margin of the modular build plate, with the outermost ring being operable to receive and support a canister formed via the additive build process.

3. The modular build plate of claim 2, wherein the inner ring is formed by a series of circumferentially spaced arcuate build plate sections;
optionally wherein a circular innermost section is formed by one of the build plate sections and is nested within the inner ring.

4. An additive build assembly comprising:
a modular build plate and a plurality of build parts, with the build parts being formed via an additive build process,
said modular build plate including a substrate and a plurality of build plate sections supported by the substrate to cooperatively define an additive build surface to receive the build parts,
at least one of said build plate sections being removably attached relative to the substrate to permit selective detachment of the at least one build plate section from the remainder of said build plate sections.

5. The additive build assembly of any preceding claim, wherein the substrate comprises a base plate, with the build plate sections each being removably attached to the substrate by respective fasteners; and/or
wherein each of the build plate sections receives a respective one of the build parts.

6. The additive build assembly of claim 5, wherein an outermost ring is formed by one or more of the build plate sections and extends continuously to define an outer margin of the modular build plate:
wherein one of the build parts comprises a canister containing the remaining build parts, with the outermost ring being operable to receive and support the canister; or
wherein the outermost ring is operable to receive and support a canister formed via the additive build process.

7. The additive build assembly of claim 6, wherein the outermost ring defines an opening, with one or more of said build plate sections being nested within the opening; and/or.
wherein the additive build process comprises a powder bed fusion process, with the canister containing the remaining build parts and unused powder.

8. The additive build assembly of any preceding claim, wherein the substrate and at least one of the build plate sections is integrally formed with one another; and optionally
wherein an outermost ring is formed by one or more of the build plate sections and extends continuously to define an outer margin of the modular build plate, one of the build parts comprises a canister containing the remaining build parts, with the outermost ring being operable to receive and support a canister formed via the additive build process.

9. The additive build assembly of any preceding claim, wherein an annular outermost ring is formed by one or more of the build plate sections and extends continuously to define an outer margin of the modular build plate.

10. The additive build assembly of claim 9, wherein the outermost ring defines an opening; and an annular inner ring formed by one or more of the build plate sections and nested within the opening; and/or
wherein one of the build parts comprises a canister containing the remaining build parts, with the annular outermost ring being operable to receive and support the canister.

11. The additive build assembly of claim 10, wherein the inner ring is formed by a series of circumferentially spaced arcuate build plate sections; and
optionally wherein a circular innermost section is formed by one of the build plate sections and is nested within the inner ring.

12. A method of producing multiple build parts formed via an additive build process, the method comprising:
(a) removably attaching a plurality of build plate sections relative to one another to cooperatively form at least part of a modular build plate;
(b) forming a plurality of build parts on respective ones of the build plate sections of the modular build plate; and
(c) detaching the build plate sections from each other to permit separation of the build parts.

13. The method of claim 12, wherein step (a) includes the step of removably fastening at least one of, or all of, the build plate sections to a substrate.

14. The method of claim 12 or 13, wherein one or more build plate sections form an annular outermost ring that extends endlessly to define an outer margin of the modular build plate, with one of the build parts comprising a canister; and optionally wherein step (b) includes the step of forming the canister to contain the remaining build parts, with the outermost ring being operable to receive and support the canister.

15. The method of any one of claims 12 to 14, wherein step (c) includes the step of removing fasteners from the build plate sections to detach the build plate sections from each other.
